# EUROPEAN PATENT SPECIFICATION

(11) **EP 2 525 239 B1**
(45) Date of publication and mention of the grant of the patent: **17.12.2014**
(21) Application number: 12162084.3
(22) Date of filing: 29.03.2012
(51) Int. Cl.: G01S 19/49, G01C 21/30

(54) **Apparatus and method for compensating position information in portable terminal**
Vorrichtung und Verfahren zum Ausgleichen von Positionsinformation in tragbaren Endgeräten
Appareil et procédé de compensation des informations de position dans un terminal portable

(30) Priority: 20.05.2011 KR 20110047824
(43) Date of publication of application: 21.11.2012
(73) Proprietor: Samsung Electronics Co., Ltd., Suwon-si, Gyeonggi-do, 443-742 (KR)
(72) Inventor: Ban, Ji-Hye, Gyeonggi-do (KR); Shin, Gye-Joong, Gyeonggi-do (KR)
(74) Representative: Nederlandsch Octrooibureau

(56) References cited:
- WO-A1-02/39063
- WO-A1-2008/140144
- US-A1- 2007 005 243

## Description

### TECHNICAL FIELD OF THE INVENTION

The present invention relates generally to an apparatus and a method for compensating position information of a portable terminal.

### BACKGROUND OF THE INVENTION

As wireless communication technologies advance, various services using the position information of the portable terminal are growing. For example, the portable terminal can provide a service for searching desired establishments and attraction near the currently located area. Also, using the position information of the portable terminal, it is possible to locate a friend or a user himself/herself, or to efficiently arrange and manage workers and vehicles. Further, using the position information of the portable terminal, a service can be implemented to inform a guardian of a child of current position or a moving path of the child or an object.

The portable terminal typically estimates the position information using a Global Navigation Satellite System (GNSS) and a triangulation.

Using the GNSS, the portable terminal can estimate its position information by measuring a phase of a satellite signal sent from a GNSS satellite, or by estimating a code of the satellite code and measuring a distance to the satellite.

However, the portable terminal using the GNSS cannot receive the accurate satellite signal in a shadow zone of the satellite signal, for example, inside a building or in built-up areas, and thus cannot accurately estimate its position.

WO2008140144 discloses a method of correcting a map matching and a navigation system for implementing the method arc provided. The method includes: determining whether a vehicle turns by using an acceleration sensor; and performing a map matching correction by using the determination of whether the vehicle turns and Global Positioning System (GPS) information.

US2007/005243 discloses a location-centric signal shadow mapping and storing architecture that creates maps where signals, such as GPS, cannot be seen with ease because of natural or synthetic features such as groups of tall buildings. Such maps are used with other information, such as the dynamics of the sensed velocity that had been seen before the loss of the signals, to reason about the location and likely activities being carried out by one or more people. Inferences can be made based on information about organizations and services associated with structures and locations proximal to the locations where signals were lost. Also, such reasoning can be used to turn off or to reduce the power consumed by the receivers of the location information, potentially with the joint use of accelerometers to identify when significant accelerations occur.

WO200239063 discloses a map aided positioning system for a movable object wherein digital map information and information from stale characteristic sensors of the movable object is used in a filtering procedure that based on an initial position indication repeatedly during the movement of the movable object calculates position estimate candidates and a continuously improved position estimate.

### SUMMARY OF THE INVENTION

The present invention addresses the above-discussed deficiencies of the prior art by providing an improved way of estimating the position information of a portable terminal.

Another aspect of the present invention is to provide an apparatus and a method for estimating the position information of a portable terminal in a GNSS shadow zone.

Yet another aspect of the present invention is to provide an apparatus and a method for compensating for an estimation error of the position information of a portable terminal using motion information of the portable terminal.

Still another aspect of the present invention is to provide an apparatus and a method for compensating for an estimation error of the position information of a portable terminal using motion information of the portable terminal and map mapping scheme.

A further aspect of the present invention is to provide an apparatus and a method for compensating for an estimation error of the position information estimated in a GNSS shadow zone using motion information of the portable terminal.

A further aspect of the present invention is to provide an apparatus and a method for compensating for an estimation error of the position information estimated in a GNSS shadow zone using motion information of the portable terminal and map mapping scheme.

According to one aspect of the present invention, a method for estimating position information in a portable terminal is defined in claim 1.

According to another aspect of the present invention, an apparatus for estimating position information in a portable terminal is defined in claim 10.

Further advantageous embodiments of the invention are defined in the dependent claims.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 illustrates GPS shadow zones according to an exemplary embodiment of the present invention;
FIG. 2 illustrates a portable terminal according to an exemplary embodiment of the present invention;
FIG. 3 illustrates a position compensator of the portable terminal according to an exemplary embodiment of the present invention;
FIG. 4 illustrates a method for compensating for an estimation error of position information in the portable terminal according to one exemplary embodiment of the present invention;
FIG. 5 illustrates a method for compensating for the estimation error of the position information in the portable terminal according to another exemplary embodiment of the present invention;
FIG. 6 illustrates a method for compensating for the estimation error of the position information in the portable terminal according to yet another exemplary embodiment of the present invention;
FIG. 7 illustrates a method for compensating for the estimation error of the position information in the portable terminal according to still another exemplary embodiment of the present invention; and
FIG. 8 illustrates map information for compensating for the estimation error of the position information according to an exemplary embodiment of the present invention.
Throughout the drawings, like reference numerals will be understood to refer to like parts, components and structures.

### DETAILED DESCRIPTION OF THE INVENTION

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention provide a technique for compensating an estimation error of the position information in a portable terminal.

Hereinafter, the portable terminal represents small terminals capable of estimating its position, and embraces a mobile communication terminal, a Personal Data Assistant (PDA), an MP3 player, a navigation device, and a portable computer.

It is assumed that a mobile communication terminal compensates an estimation error of the position information. Yet, other portable terminals mentioned above can compensate the estimation error of the position information according to the teachings of the present invention..

The portable terminal can estimate the using Global Navigation Satellite System (GNSS), triangulation, and position recognition using a beacon signal.

It is assumed that the position information is estimated using the Global Positioning System(GPS) among the GNSS

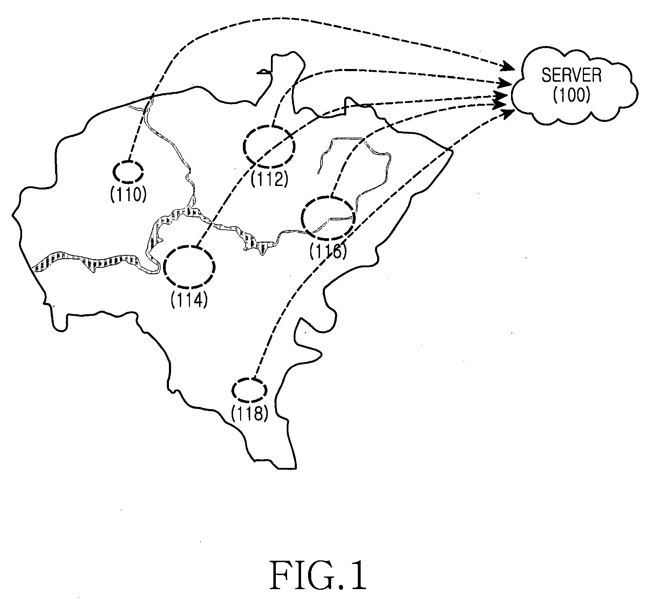

Briefly, according to the teachings of the present invention, the portable terminal selectively compensates the position information estimated using the GPS. For example, when the accurate position information can be estimated using the GPS, the portable terminal estimates the position information only using the GPS. However, when the accurate position information cannot be estimated using the GPS, the portable terminal compensates the estimation error of the position information estimated using the GPS by identifying GPS shadow zones based on a simplified map of GPS shadow zones, as shown in FIG. 1. Herein, the GPS shadow zone indicates a region where the portable terminal cannot receive the accurate satellite signal because of at least one of multipath, signal attenuation, and signal interference.

FIG. 1 depicts the GPS shadow zones according to an exemplary embodiment of the present invention.

As shown in FIG. 1, a server 100 stores map information representing the GPS shadow zones 110 through 118. The server 100 also has map information including road and building information of the GPS shadow zones 110 through 118. It is appreciated by those skilled in the art that map information of road and structures defining a specific zone is well known in the art, thus a discussion thereof is omitted. Note that the server 110 is updated with the latest geographical information for any changes in the road, buildings, and structure that would interfere with the reception of GPS signals.

The server 100 transmits the map information indicating the GPS shadow zones to the portable terminal according to a request of the portable terminal.

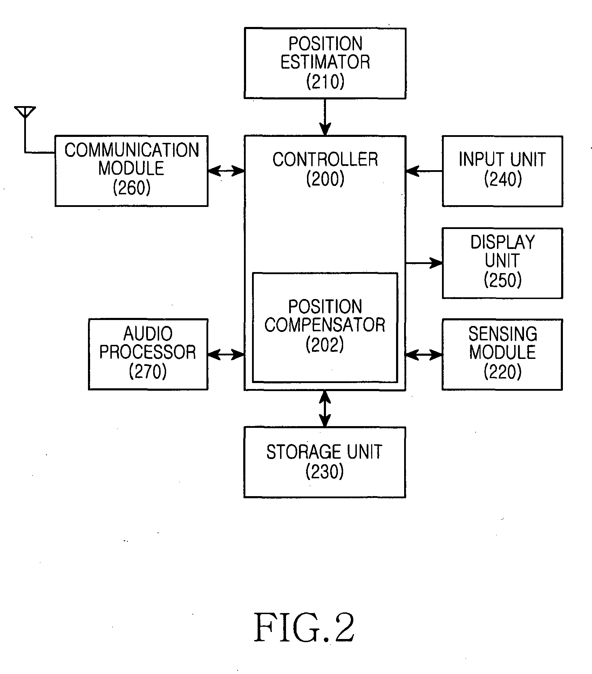

FIG. 2 is a block diagram of a portable terminal according to an exemplary embodiment of the present invention.

As shown in FIG. 2, the portable terminal includes a controller 200, a position compensator 202, a position estimator 210, a sensing module 220, a storage unit 230, an input unit 240, a display unit 250, a communication module 260, and an audio processor 270.

The controller 200 controls overall operations of the portable terminal.

In operation, the controller 200 determines whether to compensate for the estimation error of the position information estimated by the position estimator 210. For example, the controller 200 determines whether the portable terminal lies in the GPS shadow zone using the position information provided from the position estimator 210. When the portable terminal is in the GPS shadow zone, the controller 200 controls a position compensator 202 to compensate the estimation error of the position information provided from the position estimator 210. When the portable terminal does not travel within or through the GPS shadow zone, the controller 200 recognizes that the estimation error of the position information provided from the position estimator 210 is not compensated.

Using the position information provided from the position estimator 210, the controller 200 provides a Location Based Service (LBS) of the portable terminal. For example, when controlling the position compensator 202 to compensate for the estimation error of the position information, the controller 200 provides the LBS of the potable terminal using the position information of the estimation error compensated by the position compensator 202.

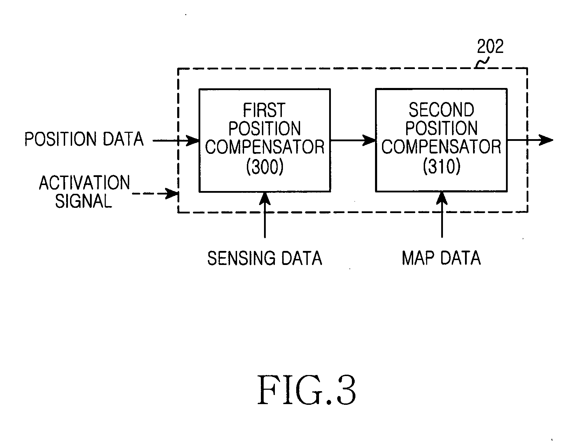

The position compensator 202 compensates the error in the position information provided from the position estimator 210 using sensing data output from the sensing module 220 and the map data of the travel region of the portable terminal. The position compensator 202 is constructed as shown in FIG. 3. Herein, the sensing data indicates motion state information of the portable terminal detected by the sensing module 220.

The position estimator 210 estimates the position of the portable terminal using a satellite signal sent from a GPS satellite.

The sensing module 220 detects the motion state of the portable terminal. To this end, the sensing module 220 includes at least one of an acceleration sensor, a geomagnetic sensor, a gyroscope sensor, and an altitude sensor.

The storage unit 230 can include a program storage for storing a program to control the operations of the portable terminal, and a data storage for storing data generating in the program execution. For example, the storage unit 230 stores the map information indicating the GPS shadow zones. When the storage unit 230 contains no map information indicating the GPS shadow zones of the travel region of the portable terminal, the controller 200 receives the map indicating the GPS shadow zones from a server and stores the map it in the storage unit 230. When the storage unit 230 contains no map information, the controller 200 receives the map data for the map mapping from a server, and stores the received map data to the storage unit 230. Herein, the map indicating the GPS shadow zones can be generated as shown in FIG. 1. The map data indicates the detailed map data or the simplified map data to indicate the travel path of the terminal.

The input unit 240 provides input data generated by the user's selection to the controller 200.

The display unit 250 displays status information, a menu screen, and story information of the portable terminal under the control of the controller 200. The display unit 250 includes a touch screen.

The communication module 260 processes voice and data communication signals transmitted and received via an antenna.

The audio processor 270 processes an audio signal input and output through the portable terminal.

FIG. 3 is a detailed block diagram of the position compensator of the portable terminal according to an exemplary embodiment of the present invention.

As shown in FIG. 3, the position compensator 202 includes a first position compensator 300 and a second position compensator 310. The position compensator 202 operates only to compensate the estimation error of the position information that is estimated by the position estimator 210 under the control of the controller 200.

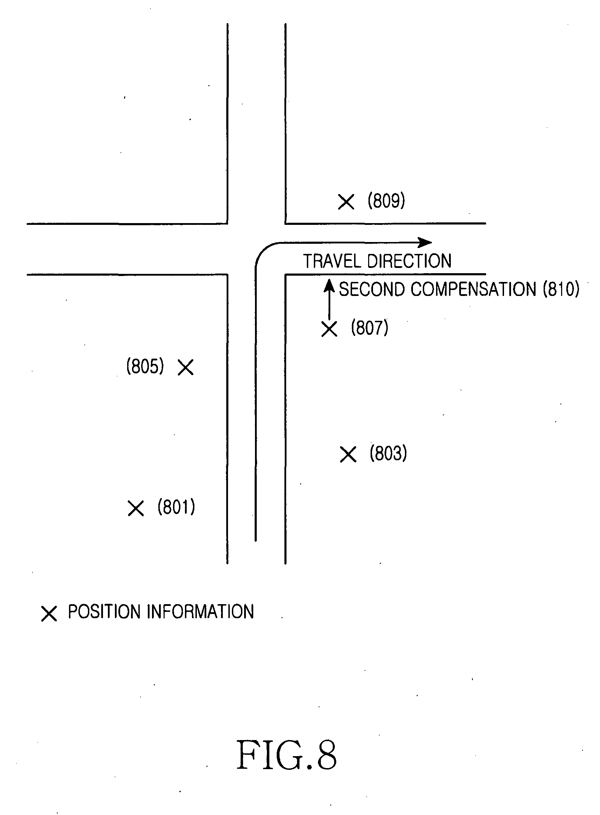

The first position compensator 300 firstly compensates the estimation error in the position information estimated by the position estimator 210 using the sensing data provided from the sensing module 220. For example, a plurality of GPS points 801, 803, and 805 can be identified according to the multi-path in a downtown area near the concentrated tall building as shown in FIG. 8. Here, when no motion of the portable terminal is detected according to the sensing data provided from the sensing module 200, the first position compensator 300 firstly compensates the estimation error by selecting any one of the GPS points 801, 803 and 805 based on a previous position of the terminal. That is, selection of one correct GPS point is correct determination of position (location) of the portable terminal. Alternatively, a plurality of GPS points 805, 807, and 809 can be identified according to the multi-path in the downtown area near the concentrated tall building as shown in FIG. 8. Here, when determining that the portable terminal turns to the right of the intersection according to the sensing data provided from the sensing module 200, the first position compensator 300 can select only the GPS points 807 and 809 on the travel direction (the right side) of the portable terminal based on the motion of the portable terminal.

The second position compensator 310 secondarily compensates the estimation error of the position information by matching the firstly compensated position information output from the first position compensator 300, to the map. For example, from the GPS points 805, 807, and 809 estimated by the position estimator 210, the first position compensator 300 can select the GPS point 807 according to the travel direction (the right side) of the portable terminal. In so doing, the second position compensator 310 secondarily compensates 810 the estimation error of the position information by matching the selected GPS point 807 to the map.

Now, a method for compensating for the estimation error of the position information estimated using the satellite signal in the portable terminal is explained. Here, it is assumed that the portable terminal has GPS shadow zone information. When the portable terminal does not have the GPS shadow zone information, it downloads the simplified map data including the GPS shadow zone information from a separate server, as shown in FIG. 1.

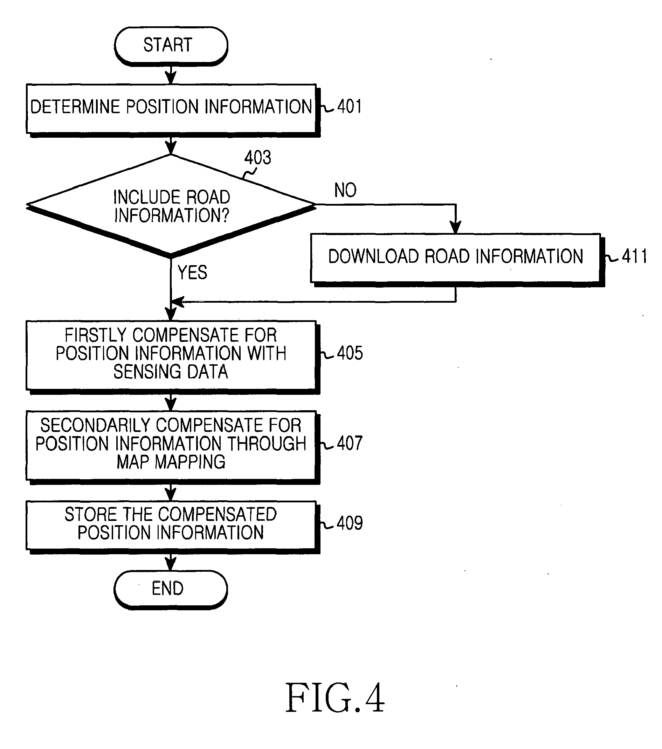

FIG. 4 illustrates a method for compensating the position information in the portable terminal according to one exemplary embodiment of the present invention.

Referring to FIG. 4, the portable terminal estimates its position in step 401. That is, the portable terminal estimates its position using the satellite signal received from the GPS satellite.

In step 403, the portable terminal determines whether it has the map data of the travel region of the portable terminal.

When having the map data, the portable terminal firstly compensates the estimation error of the position information estimated in step 401, using the sensing data indicating the motion state of the portable terminal in step 405. For example, when the plurality of the GPS points is currently estimated from the satellite signal as shown in FIG. 8, the portable terminal selects some of the estimated GPS points according to the motion of the portable terminal determined according to the sensing data. That is, selection of correct GPS point is correct determination of position (location) of the portable terminal.

When not having the map data, the portable terminal downloads the map data of its travel region from the separate server in step 411. In so doing, the map data includes any one of the detailed map data including building and road information to guide the path, and the simplified map data including only the simplified road data to compensate for the estimation error alone of the position information.

In step 405, the portable terminal firstly compensates the estimation error of the position information estimated in step 401, using the sensing data indicating the motion state of the portable terminal. For example, a plurality of GPS points 801, 803, and 805 can be identified according to the multi-path in a downtown area near the concentrated tall building as shown in FIG. 8. Here, the portable terminal firstly compensates the estimation error by selecting any one of the GPS points 801, 803 and 805 using the sensing data. That is, selection of one correct GPS point is correct determination of position (location) of the portable terminal.

In step 407, the portable terminal secondarily compensates for the estimation error of the position information by matching the firstly compensated position information to the map data. For example, when selecting the GPS point 807 according to the first compensation as shown in FIG. 8, the portable terminal matches the GPS point 807 to the road through the second compensation 810.

In step 409, the portable terminal stores the secondarily compensated position information as its position information. In so doing, the portable terminal provides the LBS such as path guide and position determine, using the stored position information.

Next, the portable terminal finishes this process.

In this embodiment, the portable terminal compensates for the estimation error of the position information estimated by the position estimator 210 using the motion information of the portable terminal and the map mapping.

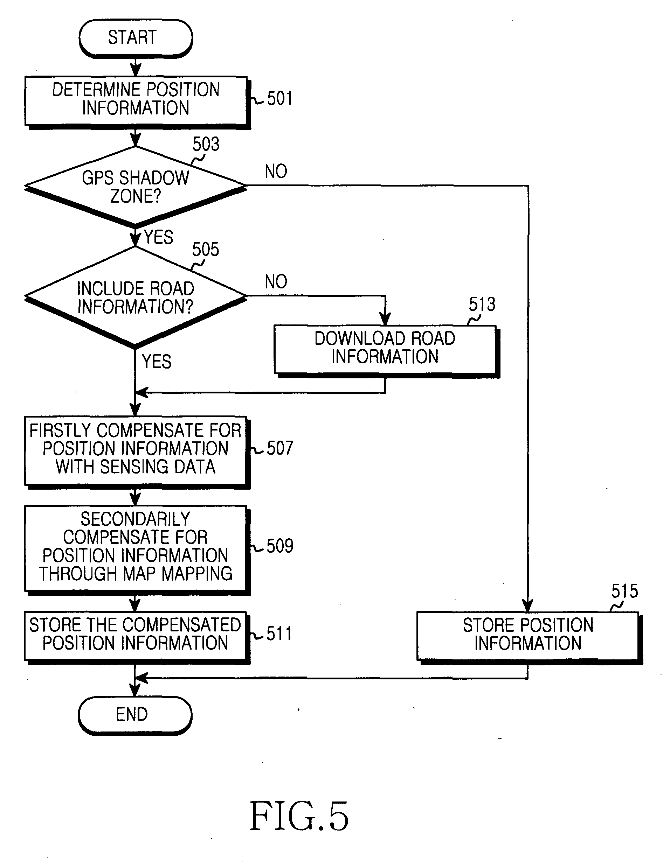

In an alternate embodiment, the portable terminal may selectively compensate for the estimation error of the position information according to reliability of the position information estimated by the position estimator 210 as shown in FIG. 5.

FIG. 5 illustrates a method for compensating the position information of the portable terminal according to another exemplary embodiment of the present invention.

In step 501, the portable terminal estimates its position. For example, the portable terminal estimates its position using the satellite signal received from the GPS satellite.

In step 503, the portable terminal determines whether it travels in the GPS shadow zone by taking account of the estimated position information.

When not traveling in the GPS shadow zone, the portable terminal recognizes that the position information estimated in step 501 is reliable. Hence, the portable terminal stores the position information estimated in step 501 as its position in step 515. In so doing, the portable terminal provides the LBS, such as path guide and position determine, using the stored position information.

By contrast, in the GPS shadow zone, the portable terminal recognizes that the position information estimated in step 501 is not reliable. In step 505, the portable terminal determines whether it has the map data of its travel region.

When having the map data, the portable terminal firstly compensates for the estimation error of the position information estimated in step 501 using the sensing data indicating its motion information in step 507. For example, when the plurality of the GPS points is currently estimated from the satellite signal as shown in FIG. 8, the portable terminal selects some of the estimated GPS points according to the motion of the portable terminal determined according to the sensing data. That is, selection of some correct GPS point is correct determination of position (location) of the portable terminal.

If without the map data, the portable terminal downloads the map data including its travel region from the separate server in step 513. In so doing, the map data includes any one of the detailed map data including the building and road information to guide the path, and the simplified map data including only the simplified road data to compensate for the estimation error alone of the position information.

In step 507, the portable terminal firstly compensates the estimation error of the position information estimated in step 501, using the sensing data indicating the motion state of the portable terminal in step 507.

In step 509, the portable terminal secondarily compensates for the estimation error of the position information by matching the firstly compensated position information to the map data. For example, when selecting the GPS point 807 according to the first compensation as shown in FIG. 8, the portable terminal matches the GPS point 807 to the road through the second compensation 810.

In step 511, the portable terminal stores the secondarily compensated position information as its position information. In so doing, the portable terminal provides the LBS such as path guide and position determine, using the stored position information.

Next, the portable terminal finishes this process.

In yet another embodiment, the portable terminal compensates the estimation error of the position information estimated by the position estimator 210 only in the GPS shadow zone.

Alternatively, the portable terminal can compensate for the estimation error of the position information estimated by the position estimator 210 even at a certain distance near the GPS shadow zone.

Alternatively, the portable terminal may compensate for the estimation error of the position information estimated by the position estimator 210 even when determining the movement into the GPS shadow zone by considering its travel direction.

After estimating the position of the portable terminal in FIGS. 4 and 5, the portable terminal determines whether there is the map data of its travel region. In so doing, after estimating the position, the portable terminal can determine the map data at any point before the second compensation through the map matching.

Hereafter, a method for compensating for the position information in the portable terminal having the map data is described. It is assumed that the portable terminal has the GPS shadow zone information. When the portable terminal does not have the GPS shadow zone information, it downloads the simplified map data including the GPS shadow zone information of FIG. 1 from the separate server.

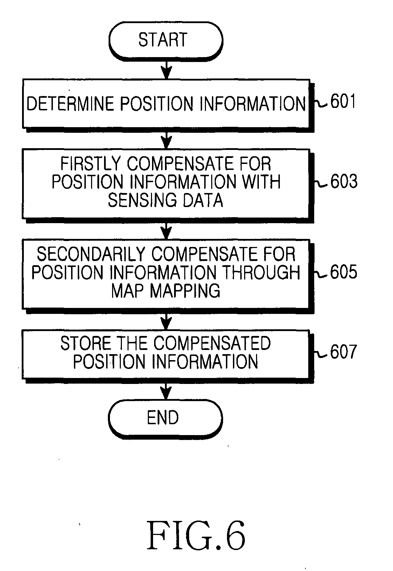

FIG. 6 illustrates a method for compensating for the position information in the portable terminal according to yet another exemplary embodiment of the present invention.

In step 601, the portable terminal estimates its position. For example, the portable terminal estimates its position using the satellite signal received from the GPS satellite.

In step 603, the portable terminal firstly compensates for the estimation error of the position information estimated in step 601, using the sensing data indicating the motion state of the portable terminal. For example, when the plurality of the GPS points is currently estimated from the satellite signal, the portable terminal selects some of the estimated GPS points according to the motion of the portable terminal determined according to the sensing data.

In step 605, the portable terminal secondarily compensates for the estimation error of the position information by matching the firstly compensated position information to the map data. For example, when selecting the GPS point 807 according to the first compensation as shown in FIG. 8, the portable terminal matches the GPS point 807 to the road through the second compensation 810.

In step 607, the portable terminal stores the secondarily compensated position information as its position information. In so doing, the portable terminal provides the LBS such as path guide and position determine, using the stored position information.

Next, the portable terminal finishes this process.

In this yet another embodiment, the portable terminal compensates for the estimation error of the position information estimated by the position estimator 210 using the motion information of the portable terminal and the map mapping.

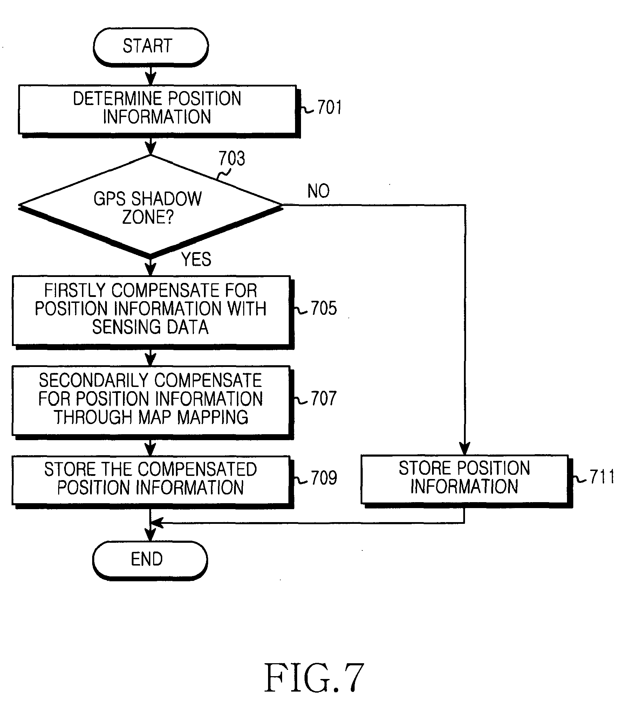

Alternatively, the portable terminal may selectively compensate for the estimation error of the position information according to the reliability of the position information estimated by the position estimator 210 as shown in FIG. 7.

FIG. 7 illustrates a method for compensating for the position information in the portable terminal according to still yet another exemplary embodiment of the present invention.

In step 701, the portable terminal estimates its position. For example, the portable terminal estimates its position using the satellite signal received from the GPS satellite.

In step 703, the portable terminal determines whether it travels in the GPS shadow zone by taking account of the estimated position information.

When not traveling in the GPS shadow zone, the portable terminal recognizes that the position information estimated in step 701 is reliable. Hence, the portable terminal stores the position information estimated in step 701 as its position in step 715. In so doing, the portable terminal provides the LBS, such as path guide and position determine, using the stored position information.

By contrast, in the GPS shadow zone, the portable terminal recognizes that the position information estimated in step 701 is not reliable. In step 705, the portable terminal firstly compensates for the estimation error of the position information estimated in step 701 using the sensing data indicating its motion state. For example, when the plurality of the GPS points is currently estimated from the satellite signal as shown in FIG. 8, the portable terminal selects some of the estimated GPS points according to the motion of the portable terminal determined according to the sensing data.

In step 707, the portable terminal secondarily compensates for the estimation error of the position information by matching the firstly compensated position information to the map data. For example, when selecting the GPS point 807 according to the first compensation as shown in FIG. 8, the portable terminal matches the GPS point 807 to the road through the second compensation 810.

In step 709, the portable terminal stores the secondarily compensated position information as its position information. In so doing, the portable terminal provides the LBS such as path guide and position determine, using the stored position information.

Next, the portable terminal finishes this process.

In this still another embodiment, the portable terminal compensates for the estimation error of the position information estimated by the position estimator 210 only in the GPS shadow zone.

Alternatively, the portable terminal can compensate for the estimation error of the position information estimated by the position estimator 210 even at a certain distance near the GPS shadow zone.

Alternatively, the portable terminal may compensate for the estimation error of the position information estimated by the position estimator 210 even when determining the movement into the GPS shadow zone by considering its travel direction.

In the above exemplary embodiments, the portable terminal compensates for the position information estimated through the position estimation scheme, using the sensing data and the map matching. When not receiving the GPS signal, the portable terminal may estimate its position using merely the sensing data.

As set forth above, by compensating for the estimation error of the position information using at least one of the sensing data and the map mapping in the portable terminal, the accurate position information can be estimated.

Since the estimation error of the position information is compensated only in the inaccurate position information estimation region, the complexity in the position information compensation can be reduced.

Further, since the estimation error of the position information is compensated using the map mapping merely with the simplified map information, memory waste in storing the map information can be reduced.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. A method for estimating position information in a portable terminal, comprising:
estimating (401) position information of the portable terminal;
firstly (405) compensating for an estimation error of the estimated position information by considering motion information of the portable terminal;
secondly (407) compensating for the estimation error of the firstly compensated position information according to a map matching scheme; and
storing (409) the position information of the compensated estimation error as the position information of the portable terminal.

2. The method of claim 1, further comprising:
after estimating (501) the position information, determining (503) reliability of the estimated position information,
wherein, when the position information is unreliable, the estimation error of the estimated position information is compensated (507).

3. The method of claim 2, wherein the determining of the reliability comprises:
determining GNSS shadow zone information;
determining (503) whether the portable terminal travels in a GNSS shadow zone by considering the estimated position information; and
when the portable terminal travels in the GNSS shadow zone, determining that the estimated position information is unreliable

4. The method of claim 2, further comprising:
when the position information is reliable, storing (515) the estimated position information as the position information of the portable terminal.

5. The method of claim 4, further comprising:
providing a Location Based Service (LBS) using the stored position information.

6. The method of claim 1, further comprising:
after estimating the position information, determining whether map data of a travel region of the portable terminal is included; and
when the map data is not included, downloading (513) the map data of the travel region of the portable terminal from a server,
wherein the secondly compensating (509) comprises secondarily compensating (605) for the estimation error of the position information by mapping the firstly compensated position information to the downloaded map data according to the map mapping scheme.

7. The method of claim 1, further comprising:
providing a Location Based Service (LBS) using the stored position information.

8. The method of claim 1, wherein the position estimating scheme comprises at least one of a Global Navigation Satellite System (GNSS) scheme, a triangulation scheme, and a position recognition scheme using a beacon.

9. The method of claim 1, wherein the motion information of the portable terminal is determined through a sensing module which comprises at least one of an acceleration sensor, a geomagnetic sensor, a gyroscope sensor, and an altitude sensor.

10. An apparatus for estimating position information in a portable terminal, comprising:
a position estimator (210) for estimating position information of the portable terminal;
a sensing module (220) for detecting motion information of the portable terminal;
a position compensator (202) for firstly compensating for an estimation error of the position information estimated by the position estimator by considering the motion information of the portable terminal detected by the sensing module and, and secondly compensating for the estimation error of the compensated position information according to a map mapping scheme; and
a storage unit (230) for storing the position information compensated by the position compensator as the position information of the portable terminal.

11. The apparatus of claim 10, further comprising:
a controller (200) for determining reliability of the position information estimated by the position estimator, and controlling to compensate for the estimation error of the position information estimated by the position estimator when the position information is unreliable.

12. The apparatus of claim 11, wherein the determining of the reliability comprises:
determining GNSS shadow zone information;
determining whether the portable terminal travels in a GNSS shadow zone by considering the estimated position information; and
when the portable terminal travels in the GNSS shadow zone, determining that the estimated position information is unreliable

13. The apparatus of claim 11, further comprising:
when the position information is reliable, storing the estimated position information as the position information of the portable terminal.

14. The apparatus of claim 13, wherein, when map data of a travel region of the portable terminal is included, the controller downloads the map data of the travel region of the portable terminal from a server (100).

15. The apparatus of claim 10, further comprising:
a controller for providing a Location Based Service (LBS) using the position information stored to the storage unit.

## Patentansprüche

1. Verfahren zum Abschätzen von Positionsangaben in einem tragbaren Endgerät, das Folgendes umfasst:
Abschätzen (401) von Positionsangaben des tragbaren Endgerätes;
erstens (405) Kompensieren eines Abschätzungsfehlers der abgeschätzten Positionsangaben durch Betrachten von Bewegungsangaben des tragbaren Endgerätes;
zweitens (407) Kompensieren des Abschätzungsfehlers der erstens kompensierten Positionsangaben gemäß einem Kartenabstimmungsmodell und
Speichern (409) der Positionsangaben des kompensierten Abschätzungsfehlers als die Positionsangaben des tragbaren Endgerätes.

2. Verfahren nach Anspruch 1, das ferner Folgendes umfasst:
nach Abschätzen (501) der Positionsangaben Bestimmen (503) der Zuverlässigkeit der abgeschätzten Positionsangaben,
wobei, wenn die Positionsangaben unzuverlässig sind, der Abschätzungsfehler der abgeschätzten Positionsangaben kompensiert wird (507).

3. Verfahren nach Anspruch 2, wobei das Bestimmen der Zuverlässigkeit Folgendes umfasst:
Bestimmen von GNSS-Abschattungszonenangaben;
Bestimmen (503), ob das tragbare Endgerät eine GNSS-Abschattungszone durchläuft, durch Betrachten der abgeschätzten Positionsangaben und,
wenn das tragbare Endgerät die GNSS-Abschattungszone durchläuft, Bestimmen, dass die abgeschätzten Positionsangaben unzuverlässig sind.

4. Verfahren nach Anspruch 2, das ferner Folgendes umfasst:
wenn die Positionsangaben zuverlässig sind, Speichern (515) der abgeschätzten Positionsangaben als die Positionsangaben des tragbaren Endgerätes.

5. Verfahren nach Anspruch 3, das ferner Folgendes umfasst:
Bereitstellen eines ortsbezogenen Dienstes (LBS) unter Verwendung der gespeicherten Positionsangaben.

6. Verfahren nach Anspruch 1, das ferner Folgendes umfasst:
nach Abschätzen der Positionsangaben Bestimmen, ob Kartendaten eines Reisegebietes des tragbaren Endgerätes beinhaltet sind, und,
wenn die Kartendaten nicht beinhaltet sind, Herunterladen (513) der Kartendaten des Reisegebietes des tragbaren Endgerätes von einem Server,
wobei das zweitens Kompensieren (509) sekundäres Kompensieren (605) des Abschätzungsfehlers der Positionsangaben durch Abbilden der erstens kompensierten Positionsangaben auf die heruntergeladenen Kartendaten gemäß dem Kartenabbildungsmodell umfasst.

7. Verfahren nach Anspruch 1, das ferner Folgendes umfasst:
Bereitstellen eines ortsbezogenen Dienstes (LBS) unter Verwendung der gespeicherten Positionsangaben.

8. Verfahren nach Anspruch 1, wobei das Positionsabschätzungsmodell mindestens eines von einem Global-Navigation-Satellite-System-Modell (GNSS-Modell), einem Triangulationsmodell und einem Positionserkennungsmodell unter Verwendung eines Funkfeuers umfasst.

9. Verfahren nach Anspruch 1, wobei die Bewegungsangaben des tragbaren Endgerätes über ein Erfassungsmodul bestimmt werden, das mindestens einen von einem Beschleunigungssensor, einem erdmagnetischen Sensor, einem Kreiselsensor und einem Höhensensor umfasst.

10. Vorrichtung zum Abschätzen von Positionsangaben in einem tragbaren Endgerät, die Folgendes umfasst:
einen Positionsschätzer (210) zum Abschätzen von Positionsangaben des tragbaren Endgerätes;
ein Erfassungsmodul (220) zum Erfassen von Bewegungsangaben des tragbaren Endgerätes;
einen Positionskompensator (202) zum erstens Kompensieren eines Abschätzungsfehlers der Positionsangaben, die durch den Positionsschätzer abgeschätzt wurden, durch Betrachten der Bewegungsangaben des tragbaren Endgerätes, die durch das Erfassungsmodul erfasst wurden, und zweitens Kompensieren des Abschätzungsfehlers der kompensierten Positionsangaben gemäß einem Kartenabbildungsmodell und
eine Speichereinheit (230) zum Speichern der Positionsangaben, die durch den Positionskompensator kompensiert wurden, als die Positionsangaben des tragbaren Endgerätes.

11. Vorrichtung nach Anspruch 10, die ferner Folgendes umfasst:
eine Steuerung (200) zum Bestimmen der Zuverlässigkeit der Positionsangaben, die durch den Positionsschätzer abgeschätzt wurden, und Steuern, um den Abschätzungsfehler der Positionsangaben zu kompensieren, die durch den Positionsschätzer abgeschätzt wurden, wenn die Positionsangaben unzuverlässig sind.

12. Vorrichtung nach Anspruch 11, wobei das Bestimmen der Zuverlässigkeit Folgendes umfasst:
Bestimmen von GNSS-Abschattungszonenangaben;
Bestimmen, ob das tragbare Endgerät eine GNSS-Abschattungszone durchläuft, durch Betrachten der abgeschätzten Positionsangaben und,
wenn das tragbare Endgerät die GNSS-Abschattungszone durchläuft, Bestimmen, dass die abgeschätzten Positionsangaben unzuverlässig sind.

13. Vorrichtung nach Anspruch 11, die ferner Folgendes umfasst:
wenn die Positionsangaben zuverlässig sind, Speichern der abgeschätzten Positionsangaben als die Positionsangaben des tragbaren Endgerätes.

14. Vorrichtung nach Anspruch 13, wobei, wenn Kartendaten eines Reisegebietes des tragbaren Endgerätes beinhaltet sind, die Steuerung die Kartendaten des Reisegebietes des tragbaren Endgerätes von einem Server (100) herunterlädt.

15. Vorrichtung nach Anspruch 30, die ferner Folgendes umfasst:
eine Steuerung zum Bereitstellen eines ortsbezogenen Dienstes (LBS) unter Verwendung der Positionsangaben, die in der Speichereinheit gespeichert sind.

## Revendications

1. Procédé d'estimation d'informations de position dans un terminal portable, comprenant :
l'estimation (401) d'informations de position du terminal portable ;
la compensation en premier (405) d'une erreur d'estimation des informations de position estimées en tenant compte d'informations de déplacement du terminal portable ;
la compensation en deuxième (407) de l'erreur d'estimation des informations de position compensées en premier en fonction d'un schéma de correspondance de carte ; et
la mémorisation (409) des informations de position de l'erreur d'estimation compensée en tant qu'informations de position du terminal portable.

2. Procédé selon la revendication 1, comprenant en outre :
après l'estimation (501) des informations de position, la détermination (503) de la fiabilité des informations de position estimées,
dans lequel, lorsque les informations de position ne sont pas fiables, l'erreur d'estimation des informations de position estimées est compensée (507).

3. Procédé selon la revendication 2, dans lequel la détermination de la fiabilité comprend :
la détermination d'informations de zone d'ombre GNSS ;
la détermination (503) si le terminal portable se déplace dans une zone d'ombre GNSS en tenant compte des informations de position estimées ; et
lorsque le terminal portable se déplace dans la zone d'ombre GNSS, la détermination que les informations de position estimées ne sont pas fiables.

4. Procédé selon la revendication 2, comprenant en outre :
lorsque les informations de position sont fiables, la mémorisation (515) des informations de position estimées en tant qu'informations de position du terminal portable.

5. Procédé selon la revendication 4, comprenant en outre :
la fourniture d'un service basé sur l'emplacement (LBS) en utilisant les informations de position mémorisées.

6. Procédé selon la revendication 1, comprenant en outre :
après l'estimation des informations de position, la détermination si des données de carte d'une région de déplacement du terminal portable sont incluses ; et
lorsque les données de carte ne sont pas incluses, le téléchargement (513) des données de carte de la région de déplacement du terminal portable à partir d'un serveur,
dans lequel la compensation en deuxième (509) comprend la compensation en deuxième (605) de l'erreur d'estimation des informations de position en mappant les informations de position compensées en premier sur les données de carte téléchargées en fonction du schéma de mappage de carte.

7. Procédé selon la revendication 1, comprenant en outre :
la fourniture d'un service basé sur l'emplacement (LBS) en utilisant les informations de position mémorisées.

8. Procédé selon la revendication 1, dans lequel le schéma d'estimation de position comprend au moins l'un d'un schéma de système satellitaire de navigation mondial (GNSS), un schéma de triangulation et un schéma de reconnaissance de position en utilisant une balise.

9. Procédé selon la revendication 1, dans lequel les informations de déplacement du terminal portable sont déterminées par l'intermédiaire d'un module de détection qui comprend au moins l'un d'un capteur d'accélération, un capteur géomagnétique, un capteur gyroscope et un capteur d'altitude.

10. Appareil d'estimation d'informations de position dans un terminal portable, comprenant :
un estimateur de position (210) pour effectuer l'estimation d'informations de position du terminal portable ;
un module de détection (220) pour effectuer la détection d'informations de déplacement du terminal portable ;
un compensateur de position (202) pour effectuer la compensation en premier d'une erreur d'estimation des informations de position estimées par l'estimateur de position en tenant compte des informations de déplacement du terminal portable détectées par le module de détection, et la compensation en deuxième de l'erreur d'estimation des informations de position compensées en fonction d'un schéma de mappage de carte ; et
une unité de mémorisation (230) pour effectuer la mémorisation des informations de position compensées par le compensateur de position en tant qu'informations de position du terminal portable.

11. Appareil selon la revendication 10, comprenant en outre :
un organe de commande (200) pour effectuer la détermination de la fiabilité des informations de position estimées par l'estimateur de position et la commande de la compensation de l'erreur d'estimation des informations de position estimées par l'estimateur de position lorsque les informations de position ne sont pas fiables.

12. Appareil selon la revendication 11, dans lequel la détermination de la fiabilité comprend :
la détermination d'informations de zone d'ombre GNSS ;
la détermination si le terminal portable se déplace dans une zone d'ombre GNSS en tenant compte des informations de position estimées ; et
lorsque le terminal portable se déplace dans la zone d'ombre GNSS, la détermination que les informations de position estimées ne sont pas fiables.

13. Appareil selon la revendication 11, comprenant en outre :
lorsque les informations de position sont fiables, la mémorisation des informations de position estimées en tant qu'informations de position du terminal portable.

14. Appareil selon la revendication 13, dans lequel, lorsque des données de carte d'une région de déplacement du terminal portable sont incluses, l'organe de commande effectue le téléchargement des données de carte de la région de déplacement du terminal portable à partir d'un serveur (100).

15. Appareil selon la revendication 10, comprenant en outre :
un organe de commande pour effectuer la fourniture d'un service basé sur l'emplacement (LBS) en utilisant les informations de position mémorisées dans l'unité de mémorisation.
